# EUROPEAN PATENT SPECIFICATION

(11) **EP 1 381 167 B1**
(45) Date of publication and mention of the grant of the patent: **01.03.2006**
(21) Application number: 03253835.7
(22) Date of filing: 18.06.2003
(51) Int. Cl.: H04B 1/44

(54) **Transmission-and-receiving switching circuit**
Schaltungsanordnung eines Sende-Empfangsschalters
Circuit de commutation émission-réception

(30) Priority: 10.07.2002 JP 2002200798
(43) Date of publication of application: 14.01.2004
(73) Proprietor: ALPS ELECTRIC CO., LTD., Ota-ku Tokyo 145 (JP)
(72) Inventor: Izumiyama, Toru, Ota-ku, Tokyo 145 (JP)
(74) Representative: Kensett, John Hinton

(56) References cited:
- US-A- 5 933 122
- US-A- 5 991 607
- US-B1- 6 249 670

## Description

### BACKGROUND OF THE INVENTION

### 1. Field of the Invention

The present invention relates to transmission-and-receiving switching circuits which connect an antenna to a transmission circuit or to a receiving circuit of a TDMA method transmission-and-receiving unit and others used in portable telephones, radio LANs, and others.

### 2. Description of the Related Art

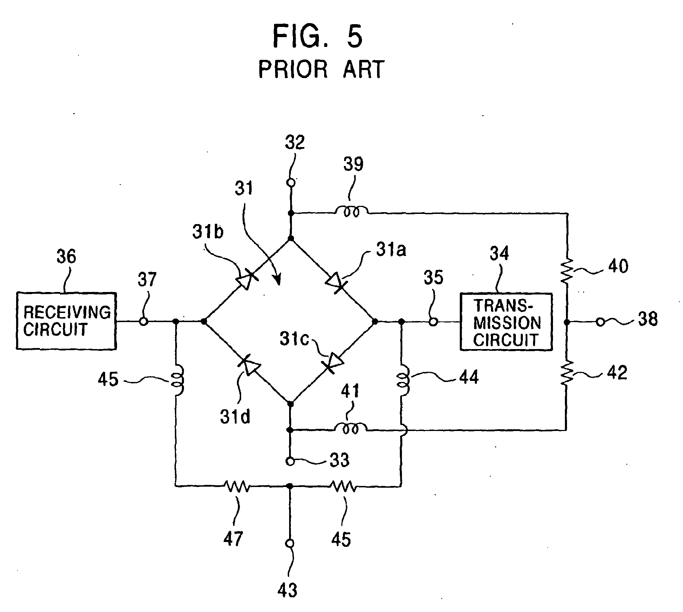

Fig. 5 shows a conventional transmission-and-receiving switching circuit. A switch circuit 31 is formed of first to fourth switching diodes 31a to 31d connected in a ring shape so as to have the same PN-junction direction. The connection point of the first switching diode 31a and the second switching diode 31b adjacent to each other serves as a first signal input-and-output end 32, and the connection point of the third switching diode 31c and the fourth switching diode 31d adjacent to each other serves as a second signal input-and-output end 33. One antenna (antenna A, not shown) is connected to the first signal input-and-output end 32, and the other antenna (antenna B, not shown) is connected to the second signal input-and-output end 33. One antenna is required for usual transmission and receiving, but two antennas are used in this case to allow space diversity receiving.

A transmission circuit 34 and a receiving circuit 36 to which the antenna A or the antenna B is connected by the switch circuit 31, each include an oscillator for outputting a local oscillation signal for frequency conversion.

The transmission circuit 34 is connected to a transmission end 35 which is the connection point of the first switching diode 31a and the third switching diode 31c. and the receiving circuit 36 is connected to a receiving end 37 which is the connection point of the second switching diode 31b and the fourth switching diode 31d.

As a result, the transmission circuit 34 is connected to the first signal input-and-output end 32 through the first switching diode 31a, and is also connected to the second signal input-and-output end 33 through the third switching diode 31c. The receiving circuit 36 is connected to the first signal input-and-output end 32 through the second switching diode 31b, and is also connected to the second signal input-and-output end 33 through the fourth switching diode 31d.

An inductor element 39 and a resistor 40 connected to each other in series and used for feeding are connected between the first signal input-and-output end 32 and a first switching terminal 38, and an inductor element 41 and a resistor 42 connected to each other in series and used for feeding are also connected between the second signal input-and-output end 33 and the first switching terminal 38.

In the same way, an inductor element 44 and a resistor 45 connected to each other in series and used for feeding are connected between the transmission end 35 and a second switching terminal 43, and an inductor element 46 and a resistor 47 connected to each other in series and used for feeding are connected between the receiving end 37 and the second switching terminal 43.

The resistors 40, 42, 45, and 47 determine the magnitude of current flowing into the switching diodes 31a to 31d. The inductor elements 39, 41, 44, and 46 play a role as choke inductors, and prevent the impedance at the first and second signal input-and-output ends 32 and 33, the transmission end 35, and the receiving end 37 from decreasing.

With the above-described structure, a low switching voltage is applied to one of the first switching terminal 38 and the second switching terminal 43, and a high switching voltage is applied to the other. As a result, the first switching diode 31a and the fourth switching diode 31d are both turned on or off, and the second switching diode 31b and the third switching diode 31c are both turned on or off. In this case, when the first switching diode 31a and the fourth switching diode 31d are both turned on, the second switching diode 31b and the third switching diode 31c are both turned off. Conversely, when the first switching diode 31a and the fourth switching diode 31d are both turned off, the second switching diode 31b and the third switching diode 31c are both turned on.

An operation will be described next, performed when the first signal input-and-output end 32 and the antenna A connected thereto are used. In a transmission mode, the first switching terminal 38 is set high and the second switching terminal 43 is set low. Then, the first switching diode 31a (fourth switching diode 31d) is turned on, and the second switching diode 31b (third switching diode 31c) is turned off. In this mode, of course, the transmission circuit 34 is in an operation state, and the receiving circuit 36 is in a non-operation state. Therefore, a transmission signal is output to the antenna A through the first switching diode 31a. In this state, the inductance of the inductors 39 and 44 for feeding the switching diode 31a is set sufficiently high to prevent the loss of the transmission signal.

In a receiving mode, the first switching terminal 38 is set low and the second switching terminal 43 is set high. Then, the first switching diode 31a (fourth switching diode 31d) is turned off, and the second switching diode 31b (third switching diode 31c) is turned on. In this mode, of course, the receiving circuit 36 is in an operation state, and the transmission circuit 34 is in a non-operation state. Therefore, a receiving signal is input from the antenna A through the second switching diode 31b to the receiving circuit 36. In this state, the inductance of the inductors 39 and 46 for feeding the switching diode 31b is set sufficiently high to prevent the loss of the receiving signal.

When the antenna B is used, the first switching terminal 38 is set low and the second switching terminal 43 is set high to make the receiving circuit 36 to be in the non-operation state in the transmission mode. In the receiving mode, the first switching terminal 38 is set high and the second switching terminal 43 is set low to make the transmission circuit 34 to be in the non-operation state.

With the above-described structure, the local oscillation signal generated in the transmission circuit is output to the antenna A together with the transmission signal during transmission, and interferes with other communication units. In the same way, when the antenna A receives a signal other than the intended receiving signal during receiving, the signal is also input to the receiving circuit to interfere with the receiving circuit. In addition, the local oscillation signal generated in the receiving circuit is also output to the antenna A.

### SUMMARY OF THE INVENTION

An object of the present invention is to provide a simple structure which does not output superfluous signals other than the intended transmission signal and which does not receive superfluous signals other than the intended receiving signal at the receiving circuit.

The foregoing object is achieved in one aspect of the present invention through the provision of a transmission-and-receiving switching circuit including a signal input-and-output end to which an antenna is connected; a transmission circuit connected to the signal input-and-output end through a first switching diode; a receiving circuit connected to the signal input-and-output end through a second switching diode; and inductor elements for feeding bias voltages to the first switching diode and the second switching diode, wherein the first switching diode and the second switching diode are switched to states opposite to each other between on and off by the bias voltages; a first capacitor element is provided which constitutes a first resonant circuit for at least series resonating between the first switching diode and the ground together with the inductor element for feeding the first switching diode; and the series resonant frequency of the first resonant circuit is set almost equal to the frequency of a signal other than the transmission signal output from the transmission circuit.

The series resonant frequency may be set almost equal to the frequency of a local oscillation signal in the transmission circuit.

The first resonant circuit may be provided between the connection point of the first switching diode and the transmission circuit, and the ground.

The transmission-and-receiving switching circuit may be configured such that the first resonant circuit is formed of a series-parallel resonant circuit, and the parallel resonant frequency of the series-parallel resonant circuit is set almost equal to the frequency of the transmission signal.

The first capacitor element and the inductor element for feeding the first switching diode may be formed of lumped-constant-type circuit components.

The transmission-and-receiving switching circuit may be configured such that a second capacitor element is provided which constitutes a second resonant circuit for at least series resonating between the second switching diode and the ground together with the inductor element for feeding the second switching diode, and the series resonant frequency of the second resonant circuit is set almost equal to the frequency of a signal other than the receiving signal input to the receiving circuit.

The second resonant circuit may be provided between the connection point of the second switching diode and the receiving circuit, and the ground.

The transmission-and-receiving switching circuit may be configured such that the second resonant circuit is formed of a second series-parallel resonant circuit, and the parallel resonant frequency of the second series-parallel resonant circuit is set almost equal to the frequency of the receiving signal.

The second capacitor element and the inductor element for feeding the second switching diode may be formed of lumped-constant-type circuit components.

Embodiments of the invention will now be described, by way of example only, with reference to the accompanying drawings, in which:
Fig. 1 is a circuit diagram showing the structure of a transmission-and-receiving switching circuit according to the present invention.
Fig. 2 is a circuit diagram showing the structure of another transmission-and-receiving switching circuit according to the present invention.
Fig. 3 is a circuit diagram showing the structure of still another transmission-and-receiving switching circuit according to the present invention.
Fig. 4 is a circuit diagram showing the structure of yet another transmission-and-receiving switching circuit according to the present invention.
Fig. 5 is a circuit diagram showing the structure of a conventional transmission-and-receiving switching circuit.

### DESCRIPTION OF THE PREFERRED EMBODIMENTS

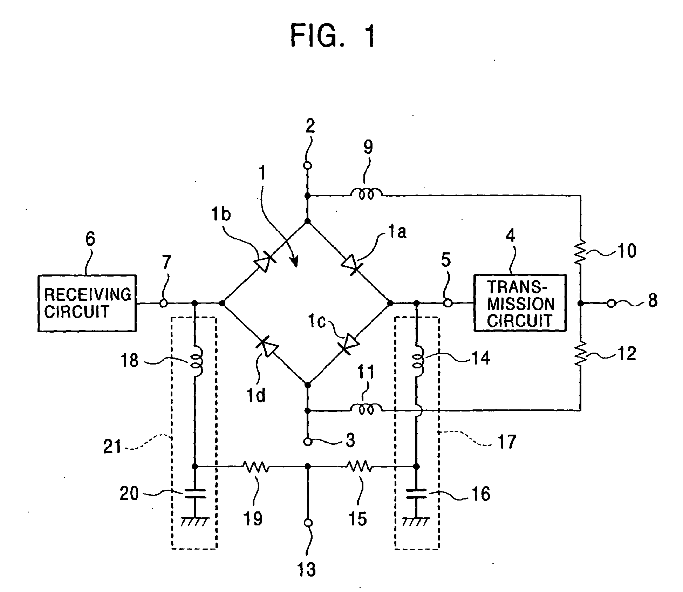

Fig. 1 to Fig. 4 show transmission-and-receiving switching circuits according to the present invention. In Fig. 1, a switch circuit 1 is formed of first to fourth switching diodes 1a to 1d connected in a ring shape so as to have the same PN-junction direction. The connection point of the first switching diode 1a and the second switching diode 1b adjacent to each other serves as a first signal input-and-output end 2, and the connection point of the third switching diode 1c and the fourth switching diode 1d adjacent to each other serves as a second signal input-and-output end 3. One antenna (antenna A, not shown) is connected to the first signal input-and-output end 2, and the other antenna (antenna B, not shown) is connected to the second signal input-and-output end 3. One antenna is required for usual transmission and receiving, but two antennas are used in this case to allow space diversity receiving.

A transmission circuit 4 and a receiving circuit 6 to which the antenna A or the antenna B is connected by the switch circuit 1, each include an oscillator for outputting a local oscillation signal for frequency conversion.

The transmission circuit 4 is connected to a transmission end 5 which is the connection point of the first switching diode 1a and the third switching diode 1c, and the receiving circuit 6 is connected to a receiving end 7 which is the connection point of the second switching diode 1b and the fourth switching diode 1d.

As a result, the transmission circuit 4 is connected to the first signal input-and-output end 2 through the first switching diode 1a, and is also connected to the second signal input-and-output end 3 through the third switching diode 1c. The receiving circuit 6 is connected to the first signal input-and-output end 2 through the second switching diode 1b, and is also connected to the second signal input-and-output end 3 through the fourth switching diode 1d.

An inductor element 9 and a resistor 10 connected to each other in series and used for feeding are connected between the first signal input-and-output end 2 and a first switching terminal 8, and an inductor element 11 and a resistor 12 connected to each other in series and used for feeding are also connected between the second signal input-and-output end 3 and the first switching terminal 8.

In the same way, an inductor element 14 and a resistor 15 connected to each other in series and used for feeding are connected between the transmission end 5 and a second switching terminal 13. The inductor element 14 is connected to the transmission end 5, and the resistor 15 is connected to the second switching terminal 13. The connection point of the inductor element 14 and the resistor 15 is grounded by a first capacitor element 16 in a high-frequency manner. The inductor element 14 and the first capacitor element 16 are formed of lumped-constant-type circuit components. Therefore, the inductor element 14 and the first capacitor element 16 constitute a first resonant circuit 17 which series resonates at a one-point frequency. This series resonant frequency is set almost equal, for example, to the local oscillation frequency of the oscillator in the transmission circuit 4.

An inductor element 18 and a resistor 19 connected to each other in series and used for feeding are connected between the receiving end 7 and the second switching terminal 13. The inductor element 18 is connected to the receiving end 7, and the resistor 19 is connected to the second switching terminal 13. The connection point of the inductor element 18 and the resistor 19 is grounded by a second capacitor element 20 in a high-frequency manner. The inductor element 18 and the second capacitor element 20 are formed of lumped-constant-type circuit components. Therefore, the inductor element 18 and the second capacitor element 20 constitute a second resonant circuit 21 which series resonates at a one-point frequency. This series resonant frequency is set almost equal, for example, to the local oscillation frequency of the oscillator in the receiving circuit 6 or to the frequency of a signal other than the receiving signal received by the antenna.

The resistors 10, 12, 15, and 19 determine the magnitude of current flowing into the switching diodes 1a to 1d. The inductor elements 9 and 11 play a role as choke inductors, and prevent the impedance at the first and second signal input-and-output ends 2 and 3 from decreasing.

The inductor elements 14 and 18 constitute the resonant circuits 17 and 21 while they serve as high-impedance elements at the transmission frequency and the receiving frequency to prevent the transmission signal and the receiving signal from attenuating.

With the above-described structure, a low switching voltage is applied to one of the first switching terminal 8 and the second switching terminal 13, and a high switching voltage is applied to the other. As a result, the first switching diode 1a and the fourth switching diode 1d are both turned on or off, and the second switching diode 1b and the third switching diode 1c are both turned on or off. In this case, when the first switching diode 1a and the fourth switching diode 1d are both turned on, the second switching diode 1b and the third switching diode 1c are both turned off. Conversely, when the first switching diode 1a and the fourth switching diode 1d are both turned off, the second switching diode 1b and the third switching diode 1c are both turned on.

An operation will be described next, performed when the first signal input-and-output end 2 and the antenna A connected thereto are used. In a transmission mode, the first switching terminal 8 is set high and the second switching terminal 13 is set low. Then, the first switching diode 1a (fourth switching diode 1d) is turned on, and the second switching diode 1b (third switching diode 1c) is turned off. In this mode, of course, the transmission circuit 4 is in an operation state, and the receiving circuit 6 is in a non-operation state. Therefore, a transmission signal is output to the antenna A through the first switching diode 1a. In this state, the inductance of the inductors 9 and 14 for feeding the switching diode 1a is set sufficiently high to prevent the loss of the transmission signal. In addition, even when the local oscillation signal is output from the transmission circuit 4, it attenuates at the first resonant circuit 17, and is not output to the antenna A. The series resonant frequency of the first resonant circuit 17 may be set to a signal frequency other then the local oscillation frequency in a case-by-case basis.

In a receiving mode, the first switching terminal 8 is set low and the second switching terminal 13 is set high. Then, the first switching diode 1a (fourth switching diode 1d) is turned off, and the second switching diode 1b (third switching diode 1c) is turned on. In this mode, of course, the receiving circuit 6 is in an operation state, and the transmission circuit 4 is in a non-operation state. Therefore, a receiving signal is input from the antenna A through the second switching diode 1b to the receiving circuit 6. In this state, the inductance of the inductors 9 and 18 for feeding the second switching diode 1b is set sufficiently high to prevent the loss of the receiving signal. When the series resonant frequency of the second resonant circuit 21 is set to the frequency of a signal other than the receiving signal, for example, to the frequency of the local oscillation signal generated by the receiving circuit 6, the signal is not output to the antenna A. Conversely, when there is the possibility of receiving a superfluous signal by the antenna A, if the resonant frequency of the second resonant circuit 21 is set to the frequency of that signal, the signal is prevented from entering the receiving circuit 6.

When the antenna B is used, the first switching terminal 8 is set low and the second switching terminal 13 is set high to make the receiving circuit 6 to be in the non-operation state in the transmission mode. In the receiving mode, the first switching terminal 8 is set high and the second switching terminal 13 is set low to make the transmission circuit 4 to be in the non-operation state.

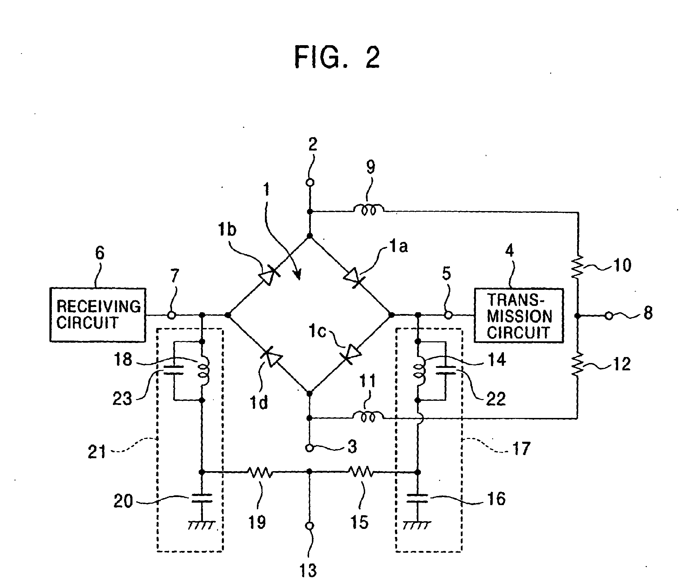

Fig. 2 shows another example structure according to the present invention. In this structure, a first resonant circuit 17 and a second resonant circuit 21 are formed of series-parallel resonant circuits. To structure a series-parallel resonant circuit, in the first resonant circuit 17, an inductor element 14 and a third capacitor element 22 are connected in parallel, and the parallel resonant frequency determined by the inductor element 14 and the third capacitor element 22 is set almost equal to the transmission frequency. In the second resonant circuit 21, an inductor element 18 and a fourth capacitor element 23 are connected in parallel. The parallel resonant frequency determined by the inductor element 18 and the third capacitor element 23 is set almost equal to the receiving frequency. The other portions have the same structure as those shown in Fig. 1.

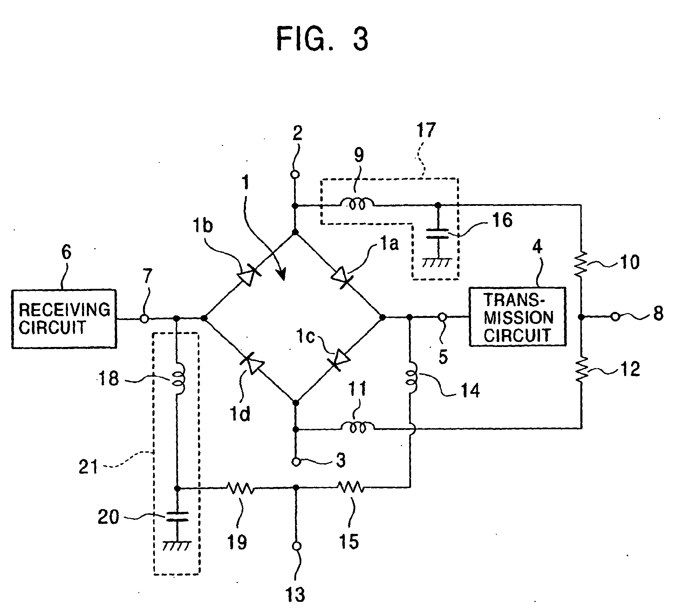

Fig. 3 shows still another example structure according to the present invention. In this structure, a first resonant circuit 17 is formed by using an inductor element 9 for feeding a first switching diode 1a at a first signal input-and-output end 2 side. To this end, the connection point of the inductor element 9 and a resistor 10 is grounded by a first capacitor element 16 in a high-frequency manner, and the series resonant frequency of the inductor element 9 and the first capacitor element 16 is set, for example, almost equal to the local oscillation frequency of a transmission circuit 4.

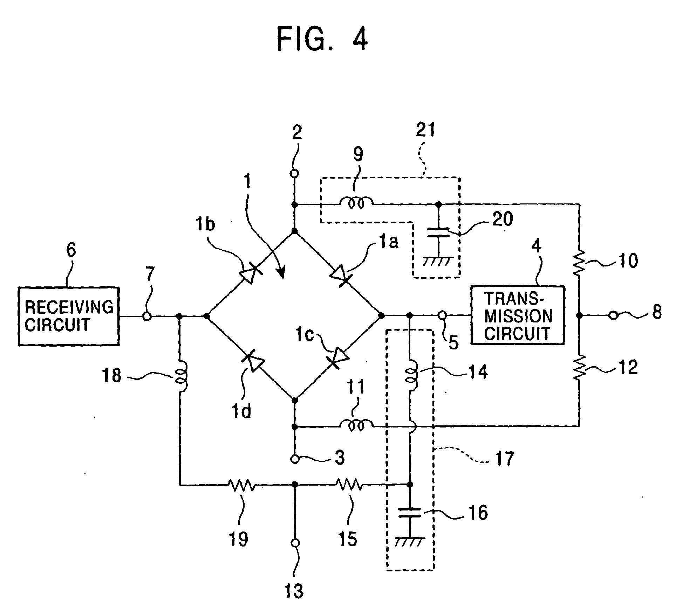

Further. Fig. 4 shows another structure. A second resonant circuit 21 is formed by using an inductor element 9 (also serving as an inductor element for feeding a first switching diode la) for feeding at a first signal input-and-output end 2 side a second switching diode 1b. To this end, the connection point of the inductor element 9 and a resistor 10 is grounded by a second capacitor element 20 in a high-frequency manner, and the series resonant frequency of the inductor element 9 and the second capacitor element 20 is set, for example, equal to the local oscillation frequency of a receiving circuit 6 or to the frequency of a signal other than the receiving signal which arrives at the antenna A.

As described above, since the first capacitor element is provided which constitutes the first resonant circuit for at least series resonating between the first switching diode and the ground together with the inductor element for feeding the first switching diode, and the series resonant frequency of the first resonant circuit is set almost equal to the frequency of a signal other than the transmission signal output from the transmission circuit, the transmission signal is not attenuated, and a signal which causes interference is not output to the antenna.

Since the series resonant frequency is set almost equal to the frequency of the local oscillation signal in the transmission circuit, the local oscillation signal is not output to the antenna, and therefore, no interference is given to other communication units.

Since the first resonant circuit is provided between the connection point of the first switching diode and the transmission circuit, and the ground, the first resonant circuit does not give any effect on the receiving circuit side during receiving.

Since the first resonant circuit is formed of a series-parallel resonant circuit, and the parallel resonant frequency of the series-parallel resonant circuit is set almost equal to the frequency of the transmission signal, the series-parallel resonant circuit does not attenuate the transmission signal.

Since the first capacitor element and the inductor element for feeding the first switching diode are formed of lumped-constant-type circuit components, only one series resonant frequency and only one parallel resonant frequency exist, and they can be made equal to the transmission frequency and the local oscillation frequency determined at random.

Since a second capacitor element is provided which constitutes a second resonant circuit for at least series resonating between the second switching diode and the ground together with the inductor element for feeding the second switching diode, and the series resonant frequency of the second resonant circuit is set almost equal to the frequency of a signal other than the receiving signal input to the receiving circuit.

Since the second resonant circuit is provided between the connection point of the second switching diode and the receiving circuit, and the ground, the second resonant circuit does not give any effect on the receiving circuit side during transmission. ,

Since the second resonant circuit is formed of a second series-parallel resonant circuit, and the parallel resonant frequency of the second series-parallel resonant circuit is set almost equal to the frequency of the receiving signal, the receiving signal is not attenuated.

Since the second capacitor element and the inductor element for feeding the second switching diode are formed of lumped-constant-type circuit components, the resonant frequencies can be set to the receiving frequency determined at random, and to the frequency of an interference signal.

## Claims

1. A transmission-and-receiving switching circuit (1) comprising:
a signal input-and-output end to which an antenna is connected;
a transmission circuit (4) connected to the signal input-and-output end through a first switching diode (1a);
a receiving circuit (6) connected to the signal input-and-output end through a second switching diode (1b); and
inductor elements (14,18) for feeding bias voltages to the first switching diode (1a) and the second switching diode (1b),
wherein the first switching diode (1a) and the second switching diode (1b) are switched to states opposite to each other between on and off by the bias voltages;
a first capacitor element (16) is provided which constitutes a first resonant circuit for at least series resonating between the first switching diode (1a) and the ground together with the inductor element (14) for feeding the first switching diode; and
the series resonant frequency of the first resonant circuit is set almost equal to the frequency of a signal other than the transmission signal output from the transmission circuit.

2. A transmission-and-receiving switching circuit according to Claim 1, wherein the series resonant frequency is set almost equal to the frequency of a local oscillation signal in the transmission circuit.

3. A transmission-and-receiving switching circuit according to Claim 1 or 2, wherein the first resonant circuit is provided between the connection point of the first switching diode (1a) and the transmission circuit (4), and the ground.

4. A transmission-and-receiving switching circuit according to Claim 1, wherein the first resonant circuit is formed of a series-parallel resonant circuit, and the parallel resonant frequency of the series-parallel resonant circuit is set almost equal to the frequency of the transmission signal.

5. A transmission-and-receiving switching circuit according to any preceding claim, wherein the first capacitor element (16) and the inductor element (14) for feeding the first switching diode are formed of lumped-constant-type circuit components.

6. A transmission-and-receiving switching circuit according to Claim 1, wherein a second capacitor element (20) is provided which constitutes a second resonant circuit for at least series resonating between the second switching diode (1b) and the ground together with the inductor element (18) for feeding the second switching diode; and the series resonant frequency of the second resonant circuit is set almost equal to the frequency of a signal other than the receiving signal input to the receiving circuit (6).

7. A transmission-and-receiving switching circuit according to Claim 6, wherein the second resonant circuit is provided between the connection point of the second switching diode (1b) and the receiving circuit (6), and the ground.

8. A transmission-and-receiving switching circuit according to Claim 6, wherein the second resonant circuit is formed of a second series-parallel resonant circuit, and the parallel resonant frequency of the second series-parallel resonant circuit is set almost equal to the frequency of the receiving signal.

9. A transmission-and-receiving switching circuit according to Claim 6, wherein the second capacitor element (20) and the inductor element (18) for feeding the second switching diode are formed of lumped-constant-type circuit components.

## Revendications

1. Circuit de commutation de transmission et de réception (1) comprenant :
une extrémité d'entrée et de sortie de signal à laquelle une antenne est connectée ;
un circuit de transmission (4) connecté à l'extrémité d'entrée et de sortie de signal par l'intermédiaire d'une première diode de commutation (1a) ;
un circuit de réception (6) connecté à l'extrémité d'entrée et de sortie de signal par l'intermédiaire d'une seconde diode de commutation (1b) ; et
des éléments d'inducteur (14, 18) pour alimenter la première diode de commutation (1a) et la seconde diode de commutation (1b) avec des tensions polarisées,
dans lequel la première diode de commutation (1a) et la seconde diode de commutation (1b) sont commutées vers des états opposés l'un à l'autre entre MARCHE et ARRET, par les tensions polarisées ;
un premier élément de condensateur (16) est prévu, qui constitue un premier circuit résonant pour au moins avoir une résonance série entre la première diode de commutation (1a) et la terre, avec l'élément d'inducteur (14) pour alimenter la première diode de commutation ; et
la fréquence de résonance série du premier circuit résonant est définie pour être pratiquement égale à la fréquence d'un signal autre que le signal de transmission sorti par le circuit de transmission.

2. Circuit de commutation de transmission et de réception selon la revendication 1, dans lequel la fréquence de résonance série est définie pour être pratiquement égale à la fréquence d'un signal oscillant local dans le circuit de transmission.

3. Circuit de commutation de transmission et de réception selon la revendication 1 ou 2, dans lequel le premier circuit résonant est agencé entre le point de connexion de la première diode de commutation (1a) et le circuit de transmission (4), et la terre.

4. Circuit de commutation de transmission et de réception selon la revendication 1, dans lequel le premier circuit résonant est formé d'un circuit résonant série-parallèle, et la fréquence de résonance parallèle du circuit résonant série-parallèle est définie pour être pratiquement égale à la fréquence du signal de transmission.

5. Circuit de commutation de transmission et de réception selon l'une quelconque des revendications précédentes, dans lequel le premier élément de condensateur (16) et l'élément d'inducteur (14) pour alimenter la première diode de commutation (1a) sont formés avec des composants de circuit de type à constantes localisées.

6. Circuit de commutation de transmission et de réception selon la revendication 1, dans lequel un second élément de condensateur (20) est prévu, qui constitue un second circuit résonant pour au moins avoir une résonance série entre la seconde diode de commutation (1b) et la terre, avec l'élément d'inducteur (18), pour alimenter la seconde diode de commutation ; et la fréquence de résonance série du second circuit résonant est définie pour être pratiquement égale à la fréquence d'un signal autre que le signal de réception entré dans le circuit de réception (6).

7. Circuit de commutation de transmission et de réception selon la revendication 6, dans lequel le second circuit résonant est agencé entre le point de connexion de la seconde diode de commutation (1b) et le circuit de réception (6), et la terre.

8. Circuit de commutation de transmission et de réception selon la revendication 6, dans lequel le second circuit résonant est formé d'un second circuit résonant série-parallèle, et la fréquence de résonance parallèle du second circuit résonant série-parallèle est définie pour être pratiquement égale à la fréquence du signal de réception.

9. Circuit de commutation de transmission et de réception selon la revendication 6, dans lequel le second élément de condensateur (20) et l'élément d'inducteur (18) pour alimenter la seconde diode de commutation (1b) sont formés avec des composants de circuit de type à constantes localisées.

## Patentansprüche

1. Eine Sende-und-Empfangs-Schaltschaltung (1), aufweisend:
ein Signalzuführ-und-ausgabe-Ende, mit dem eine Antenne verbunden ist;
eine Sendeschaltung (4), die über eine erste Schaltdiode (1a) mit dem Signalzuführ-und-ausgabe-Ende verbunden ist;
eine Empfangsschaltung (6), die über eine zweite Schaltdiode (1b) mit dem Signalzuführ-und-ausgabe-Ende verbunden ist; und
Induktivitätselemente (14,18) für die Zuführung von Vorspannspannungen an die erste Schaltdiode (1a) und die zweite Schaltdiode (1b),
wobei die erste Schaltdiode (1a) und die zweite Schaltdiode (1b) von den Vorspannspannungen in einander entgegengesetzte Zustände zwischen EIN und AUS geschaltet werden;
ein erstes Kondensatorelement (16) vorgesehen ist, das zusammen mit dem Induktivitätselement (14) eine erste Resonanzschaltung für mindestens Reihenresonanz zwischen der ersten Schaltdiode (1a) und der Masse für die Einspeisung in die erste Schaltdiode bildet; und
die Reihenresonanzfrequenz der ersten Resonanzschaltung fast gleich eingestellt ist wie die Frequenz eines anderen Signals als das von der Sendeschaltung ausgegebene Sendesignal.

2. Eine Sende-und-Empfangs-Schaltschaltung nach Anspruch 1, wobei die Reihenresonanzfrequenz fast gleich eingestellt ist wie die Frequenz eines lokalen Schwingungssignals in der Sendeschaltung.

3. Eine Sende-und-Empfangs-Schaltschaltung nach Anspruch 1 oder 2, wobei die erste Resonanzschaltung zwischen dem Verbindungspunkt der ersten Schaltdiode (1a) und der Sendeschaltung (4) und der Masse vorgesehen ist.

4. Eine Sende-und-Empfangs-Schaltschaltung nach Anspruch 1, wobei die erste Resonanzschaltung aus einer Reihen-Parallel-Resonanzschaltung gebildet ist und die Parallelresonanzfrequenz der Reihen-Parallel-Resonanzschaltung fast gleich eingestellt ist wie die Frequenz des Sendesignals.

5. Eine Sende-und-Empfangs-Schaltschaltung nach einem beliebigen der vorhergehenden Ansprüche, wobei das erste Kondensatorelement (16) und das Induktivitätselement (14) für die Einspeisung in die erste Schaltdiode aus Schaltungskomponenten vom konzentriert-konstanten Typ gebildet sind.

6. Eine Sende-und-Empfangs-Schaltschaltung nach Anspruch 1, wobei ein zweites Kondensatorelement (20) vorgesehen ist, das zusammen mit dem Induktivitätselement (18) für die Einspeisung in die zweite Schaltdiode eine zweite Resonanzschaltung für mindestens Reihenresonanz zwischen der zweiten Schaltdiode (1b) und der Masse bildet; und die Reihenresonanzfrequenz der zweiten Resonanzschaltung fast gleich eingestellt ist wie die Frequenz eines anderen Signals als das der Empfangsschaltung (6) zugeführte Empfangssignal.

7. Eine Sende-und-Empfangs-Schaltschaltung nach Anspruch 6, wobei die zweite Resonanzschaltung zwischen dem Verbindungspunkt der zweiten Schaltdiode (1b) und der Empfangsschaltung (6) und der Masse vorgesehen ist.

8. Eine Sende-und-Empfangs-Schaltschaltung nach Anspruch 6, wobei die zweite Resonanzschaltung aus einer zweiten Reihen-Parallel-Resonanzschaltung gebildet ist und die Parallelresonanzfrequenz der zweiten Reihen-Parallel-Resonanzschaltung fast gleich eingestellt ist wie die Frequenz des Empfangssignals.

9. Eine Sende-und-Empfangs-Schaltschaltung nach Anspruch 6, wobei das zweite Kondensatorelement (20) und das Induktivitätselement (18) für die Einspeisung in die zweite Schaltdiode aus Schaltungskomponenten vom konzentriert-konstanten Typ gebildet sind.
